# EUROPÄISCHE PATENTSCHRIFT

(11) **EP 3 438 110 B1**
(45) Veröffentlichungstag und Bekanntmachung des Hinweises auf die Patenterteilung: **20.11.2019**
(21) Anmeldenummer: 17183984.8
(22) Anmeldetag: 31.07.2017
(51) Int. Cl.: C07F 9/46, C07B 41/06, C07F 15/00

(54) **PHOSPHINITE MIT ZWEI DIREKT AM PHOSPHOR GEBUNDENEN TERT.-BUTYL-GRUPPEN**
PHOSPHINITES WITH TWO TERTIARY BUTYL GROUPS BOUND DIRECTLY TO THE PHOSPHOR
PHOSPHINITE AYANT DEUX GROUPES TERT.BUTYL RELIÉS DIRECTEMENT AU PHOSPHORE

(43) Veröffentlichungstag der Anmeldung: 06.02.2019
(73) Patentinhaber: Evonik Degussa GmbH, 45128 Essen (DE)
(72) Erfinder: BÖRNER, Armin, 18059 Rostock (DE); FRANKE, Robert, 45772 Marl (DE); SELENT, Detlef, 18059 Rostock (DE)
(74) Vertreter: Evonik Patent Association

(56) Entgegenhaltungen:
- WO-A1-2010/102962
- DATABASE CA [Online] CHEMICAL ABSTRACTS SERVICE, COLUMBUS, OHIO, US; NEU, REBECCA C. ET AL: "Probing substituent effects on the activation of H2 by phosphorus and boron frustrated Lewis pairs", XP002777065, gefunden im STN Database accession no. 2010:524769 & NEU, REBECCA C. ET AL: "Probing substituent effects on the activation of H2 by phosphorus and boron frustrated Lewis pairs", DALTON TRANSACTIONS , 39(18), 4285-4294 CODEN: DTARAF; ISSN: 1477-9226, 2010, DOI: 10.1039/C001133A 10.1039/C001133A
- DATABASE CA [Online] CHEMICAL ABSTRACTS SERVICE, COLUMBUS, OHIO, US; BEDFORD, ROBIN B. ET AL: "Catalytic Intermolecular Ortho-Arylation of Phenols", XP002777066, gefunden im STN Database accession no. 2003:765369 & BEDFORD, ROBIN B. ET AL: "Catalytic Intermolecular Ortho-Arylation of Phenols", JOURNAL OF ORGANIC CHEMISTRY , 68(22), 8669-8682 CODEN: JOCEAH; ISSN: 0022-3263, 2003, DOI: 10.1021/JO030157K 10.1021/JO030157K
- DATABASE CA [Online] CHEMICAL ABSTRACTS SERVICE, COLUMBUS, OHIO, US; JOHANNES, CHARLES WILLIAM ET AL: "Terphenyl-substituted phosphines and terphenyl phosphinites as ligands for cyclometalated palladium complexes, catalysts for coupling, arylation and amination reactions", XP002777067, gefunden im STN Database accession no. 2015:381980 & WO 2015/030682 A2 (AGENCY SCIENCE TECH & RES [SG]) 5. März 2015 (2015-03-05)
- VAN DER SLOT SASKIA C ET AL: "Rhodium-Catalyzed Hydroformylation and Deuterioformylation with Pyrrolyl-Based Phosphorus Amidite Ligands: Influence of Electronic Ligand Properties", ORGANOMETALLICS, AMERICAN CHEMICAL SOCIETY, US, Bd. 21, Nr. 19, 1. Januar 2002 (2002-01-01), Seiten 3873-3883, XP002499691, ISSN: 0276-7333, DOI: 10.1021/OM010760Y [gefunden am 2002-08-21]
- LUDOVIC CHAHEN ET AL: "New aryl phosphinite ligands avoiding ortho-metallation: Synthesis and molecular structures of trans-[PdCl2(PPh2OR)2] and trans-[Rh(CO)Cl(PPh2OR)2] (R=2,4,6-Me3C6H2; 2,6-Ph2C6H3)", INORGANICA CHIMICA ACTA, Bd. 358, Nr. 12, 13. Juni 2005 (2005-06-13), Seiten 3417-3422, XP055438999, NL ISSN: 0020-1693, DOI: 10.1016/j.ica.2005.04.041

## Beschreibung

Die Erfindung betrifft Phosphinite mit zwei direkt am Phosphor gebundenen *tert*.-Butyl-Gruppen.

Die Reaktionen zwischen Olefinverbindungen, Kohlenmonoxid und Wasserstoff in Gegenwart eines Katalysators zu den um ein C-Atom reicheren Aldehyden ist als Hydroformylierung bzw. Oxierung bekannt. Als Katalysatoren in diesen Reaktionen werden häufig Verbindungen der Übergangsmetalle der VIII. Gruppe des Periodensystems der Elemente verwendet. Bekannte Liganden sind beispielsweise Verbindungen aus den Klassen der Phosphine, Phosphite und Phosphonite mit jeweils dreiwertigem Phosphor P^{III}. Eine gute Übersicht über den Stand der Hydroformylierung von Olefinen findet sich in R. Franke, D. Selent, A. Börner, "Applied Hydroformylation", Chem. Rev., 2012, DOI:10.1021/cr3001803.

VAN DER SLOT SASKIA C ET AL, ORGANOMETALLICS, Bd. 21, Nr. 19, 2002, Seiten 3873-3883 offenbart die Rhodium-katalysierte Hydroformylierung mit Phosphiniten.

Der Erfindung lag die Aufgabe zugrunde, Phosphinite bereitzustellen, welche als Liganden in der Hydroformylierung eingesetzt werden können, und dort eine sehr gute Gesamtausbeute an Aldehyd liefern.

Gelöst wird die Aufgabe durch eine Verbindung gemäß Anspruch 1.

Verbindung der Formel (**I**): 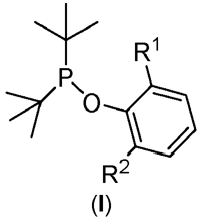 wobei
R¹ und R² für -(C6-C20)-Aryl stehen;
wobei die genannten Arylgruppen wie folgt substituiert sein können: substituierte -(C₁-C₁₂)-Alkylgruppen, substituierte -O-(C₁-C₁₂)-Alkyl, substituierte -(C₆-C₂₀)-Aryl, substituierte -O-(C₆-C₂₀)-Aryl können einen oder mehrere Substituenten aufweisen; die Substituenten sind unabhängig voneinander ausgewählt aus: -(C₁-C₁₂)-Alkyl, -O-(C₁-C₁₂)-Alkyl, Halogen.

In einer Ausführungsform stehen R¹ und R² für -(C₆-C₂₀)-Aryl.

In einer Ausführungsform stehen R¹ und R² für den gleichen Rest.

In einer Ausführungsform der Offenbarung weist die Verbindung (I) die folgende Struktur auf: 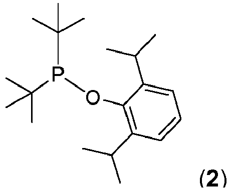 In einer Ausführungsform der Erfindung weist die Verbindung (**I**) die folgende Struktur auf:

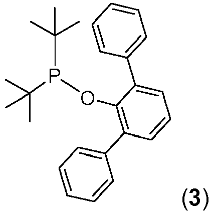

Neben der Verbindung an sich wird auch deren Verwendung in einem Ligand-Metall-Komplex zur Katalyse einer Hydroformylierungsreaktion beansprucht.

Verwendung einer zuvor beschriebenen Verbindung in einem Ligand-Metall-Komplex zur Katalyse einer Hydroformylierungsreaktion.

Des Weiteren wird auch ein Verfahren beansprucht, in welchem eine zuvor beschriebene Verbindung eingesetzt wird.

Verfahren umfassend die Verfahrensschritte:
a) Vorlegen eines Olefins,
b) Zugabe eines Komplexes, welcher eine zuvor beschriebene Verbindung umfasst, sowie ein Metall ausgewählt aus: Rh, Ru, Co, Ir,
   oder einer zuvor beschriebene Verbindung und einer Substanz, welche ein Metall ausgewählt aus: Rh, Ru, Co, Ir aufweist;
c) Zuführen von H₂ und CO,
d) Erwärmen des Reaktionsgemisches, wobei das Olefin zu einem Aldehyd umgesetzt wird.

In einer Variante des Verfahrens ist das Metall Rh.

Im Folgenden wird die Erfindung anhand von Ausführungsbeispielen näher erläutert.

### Ligandensynthese

### Ligand 1: Di-tert.-butyl(2,4-di-tert.-butylphenoxy)phosphin (Vergleichsligand)

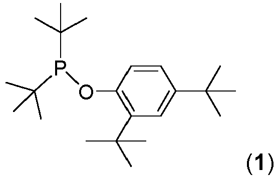

Eine gerührte Lösung von 2,4-Di-*tert*.-butylphenol (0,224 g; 1,084 mmol) in THF (3 ml) wird bei 0 °C tropfenweise mit einer Lösung von Benzylkalium (0,141 g; 1,084 mmol) in THF (6 ml) versetzt. Man rührt weitere 30 min bei 0 °C und setzt dann eine Lösung von Di-*tert*.-butylchlorphosphin (0,196 g; 1,084 mmol) in THF (4 ml) zu. Die Rektionsmischung wird über Nacht bei Raumtemperatur und anschließend noch 2 h bei 85 °C Badtemperatur gerührt. Man filtriert, verdampft das Lösungsmittel im Vakuum, nimmt den öligen Rückstand in Acetonitril (4 ml) auf und lagert bei -30 °C. Der abgeschiedene Feststoff wird abfiltriert, mit kaltem Acetonitril (1 ml) gewaschen und im Vakuum getrocknet. Ausbeute: 0,282 g (0,804 mmol; 74%).

Elementaranalyse (ber. für C₂₂H₃₉OP= 350,52 g/mol): C 76,07 (75,39); H 11,15 (11,21) %. ³¹P-NMR (CD₂Cl₂): 145,8 (s) ppm.
¹H-NMR (CD₂Cl₂): 1,27 (d, ³*J*_{HP}= 12,4 Hz, 18H) 1,36 (s, 9H); 1,54 (s, 9H); 7,16 (m, 1H); 7,38 (d, ⁵*J*_{HP}= 2,5 Hz; 1H); 7,81 (dd, ³*J*_{HH}= 8,7 Hz; ⁴*J*_{HP}= 8,7 Hz, 1H) ppm.
¹³C NMR (CD₂Cl₂): 28,3 (d, ²*J*_{CP}= 16,3 Hz); 30,8; 31,8; 34,5; 35,4; 36,0 (d, *J*_{CP}= 28,4); 116,7 (d, ³*J*_{CP}= 33,2 Hz); 123,5; 124,6; 137,5; 142,9; 156,3 (d, ²*J*_{CP}= 8,6 Hz) ppm.
ESI-TOF/HRMS: *m*/*z* 351,28110 [M⁺+H]; ber.: *m*/*z* 351,28113.

### Ligand 2: Di-tert.-butyl(2,6-diisopropylphenoxy)phosphin (Vergleichsligand)

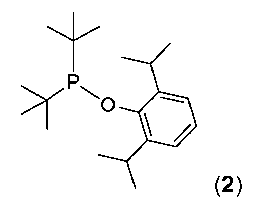

Eine gerührte Lösung von 2,6-Di-*iso*-propylphenol (0,416 g; 2,331 mmol) in THF (6 ml) wird bei 0 °C tropfenweise mit einer Lösung von Benzylkalium (0,304 g; 2,331 mmol) in THF (11 ml) versetzt. Man rührt weitere 30 min bei 0 °C und setzt dann eine Lösung von Di-*tert.-*butylchlorphosphin (0,421 g; 2,331 mmol) in THF (8 ml) zu. Die Rektionsmischung wird über Nacht bei Raumtemperatur gerührt und filtriert. Man filtriert, verdampft das Lösungsmittel im Vakuum, nimmt den viskosen Rückstand in Acetonitril (6 ml) auf und erhitzt kurz zum Sieden. Der ausgefallene Niederschlag wird abgetrennt und das Filtrat im Vakuum eingeengt. Trocknen des Rückstandes bei 1 mbar/ 50°C ergibt 0,594 g (1,842 mmol; 79%) viskoses Produkt.

Elementaranalyse (ber. für C₂₀H₃₅OP= 322,47 g/mol): C 74,66 (74,49); H 10,94 (10,94); P 9,64 (9,61) %.
³¹P-NMR (CD₂Cl₂): 172,1 (s) ppm.
¹H-NMR (CD₂Cl₂): 1,24 (d, ³*J*_{HP}= 11,3 Hz, 18H) 1,24 (s, 6H); 1,27 (s, 6H); 3,73 (s, br, 1H); 4,25 (s, br, 1H); 6,97-7,17 (m, 3H) ppm.
¹³C NMR (CD₂Cl₂): 23,7; 24,1; 27,1; 27,7; 27,9; 36,7; 37,2; 122,6; 123,6; 125,5; 138,4; 140,4; 152,1.
ESI-TOF/HRMS: *m*/*z* 323,24993 [M⁺+H], ber.: *m*/*z* 323,24983.

### Ligand 3: ([1,1':3',1"-Terphenyl]-2'-yloxy)di-tert.-butylphosphin

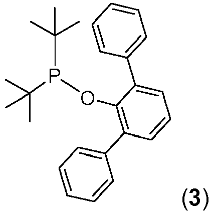

Eine gerührte Lösung von 2,6-Diphenylpropylphenol (0,458 g; 1,861 mmol) in THF (5 ml) wird bei 0 °C tropfenweise mit einer Lösung von Benzylkalium (0,242 g; 1,861 mmol) in THF (9 ml) versetzt. Man rührt weitere 30 min bei 0 °C und setzt dann eine Lösung von Di-*tert*.-butylchlorphosphin (0,336 g; 1,861 mmol) in THF (8 ml) zu. Die Rektionsmischung wird über Nacht bei Raumtemperatur gerührt und filtriert. Man filtriert, verdampft das Lösungsmittel im Vakuum, nimmt den weißen Rückstand in Heptan (8 ml) auf und rührt 12 h. Der verbleibende Feststoff wird abgetrennt und bei Raumtemperatur 3 h bei 0,1 mbar getrocknet. Ausbeute: 0,319 g (0,817 mmol, 44%).

Elementaranalyse (ber. für C₂₆H₃₁OP= 390,54 g/mol): C 80,19 (79,97); H 8,07 (8,00)%. ³¹P-NMR (CD₂Cl₂): 174,8 (s) ppm.
¹H-NMR (CD₂Cl₂): 0,64 (d, ³*J*_{HP}= 10,9 Hz; 18H); 6,96-7,43 (m, 13H) ppm.
¹³C NMR (CD₂Cl₂): 27,4 (d, ²*J*_{CP}= 16,0 Hz); 36,1 (d, *J*_{CP}= 34,9 Hz); 121,9; 126,8; 127,9; 130,7; 131,2; 134,9; 140,4; 152,7 ppm.
ESI-TOF/HRMS: *m*/*z* 391,21898 [M⁺+H], ber.: *m*/*z* 391,21853.

### Katalyseversuche

Die Hydroformylierung wurde in einem mit Druckkonstanthaltung, Gasflussmessung, Begasungsrührer und Druckpipette ausgestatteten 200 ml-Autoklaven der Fa. Premex Reactor AG, Lengau, Schweiz, durchgeführt. Zur Minimierung eines Einflusses von Feuchtigkeit und Sauerstoff wurde das als Solvens benutzte Toluol in einem Pure Solv. MD-7 System gereinigt und unter Argon aufbewahrt. Das als Substrat eingesetzte Gemisch der n-Octene (Oxeno GmbH, Octenisomerengemisch aus 1-Octen: 3 %; *cis*+*trans*-2-Octen: 49 %; *cis*+*trans*-3-Octen: 29 %; *cis*+*trans-Octen-4:* 16 %; gerüstisomere Octene: 3 %) wurden über Natrium am Rückfluß erhitzt und unter Argon destilliert.

Im Autoklaven wurden unter Argonatmosphäre Lösungen der Katalysatorvorstufe und des Liganden gemischt. Als Katalysatorvorstufe kam [(acac)Rh(COD)] (Umicore, acac = Acetylacetonat-Anion; COD = 1,5-Cyclooctadien) zum Einsatz. Von der Rhodiumverbindung wurden 10 ml einer 4,31 millimolaren Lösung in den Autoklaven gegeben. Anschließend wurde die entsprechende Menge an Liganden (Rh/Ligand = 1:5) in 10 ml Toluol gelöst und zugemischt. Durch Zugabe von weiterem Toluol wurde das Anfangsvolumen der Katalysatorlösung auf 41,0 ml eingestellt. In eine druckfeste Pipette wurden die n-Octene (10,70 g; 95,35 mmol) eingefüllt. Der Autoklav wurde bei einem Gesamtgasdruck (Synthesegas: Linde; H₂ (99,999%) : CO (99,997%) = 1:1) von 42 bar aufgeheizt. Nach Erreichen der Reaktionstemperatur von 120 °C wurde der Synthesegasdruck auf 48,5 bar erhöht und das Olefin mit einem in der Druckpipette eingestellten Überdruck von ca. 3 bar in den Autoklaven gepresst. Die Reaktion wurde bei konstantem Druck von 50 bar (Nachdruckregler der Fa. Bronkhorst, NL) über 4 h geführt. Der Autoklav wurde nach Ablauf der Reaktionszeit auf Zimmertemperatur abgekühlt, unter Rühren entspannt und mit Argon gespült. Jeweils 1 ml der Reaktionsmischungen wurden unmittelbar nach Abschalten des Rührers entnommen, mit 10 ml Pentan verdünnt und gaschromatographisch analysiert: HP 5890 Series II plus, PONA, 50 m x 0,2 mm x 0,5 µm.

### Ergebnisse der Katalyseversuche

**Tabelle 1: Hydroformylierung der n-Octene**

| Ligand | Gesamtausbeute Aldehyd (%) |
|---|---|
| 1 | 89 |
| 2 | 96 |
| 3* | 99 |

| | |
|---|---|
| * erfindungsgemäße Verbindung | |

Wie die oben beschriebenen Versuche zeigen, wird die Aufgabe durch die erfindungsgemäße Verbindung **3** gelöst.

## Patentansprüche

1. Verbindung der Formel (**I**): 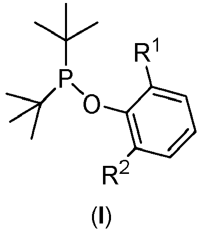 wobei
R¹ und R² für -(C₆-C₂₀)-Aryl stehen;
wobei die genannten Arylgruppen wie folgt substituiert sein können:
substituierte -(C₁-C₁₂)-Alkylgruppen, substituierte -O-(C₁-C₁₂)-Alkyl, substituierte -(C₆-C₂₀)-Aryl, substituierte -O-(C₆-C₂₀)-Aryl können einen oder mehrere Substituenten aufweisen; die Substituenten sind unabhängig voneinander ausgewählt aus: -(C₁-C₁₂)-Alkyl, -O-(C₁-C₁₂)-Alkyl, Halogen.

2. Verbindung nach Anspruch 1,
wobei R¹ und R² für den gleichen Rest stehen.

3. Verwendung einer Verbindung nach Anspruch 1 oder 2,
in einem Ligand-Metall-Komplex zur Katalyse einer Hydroformylierungsreaktion.

4. Verfahren umfassend die Verfahrensschritte:
a) Vorlegen eines Olefins,
b) Zugabe eines Komplexes, welcher eine Verbindung gemäß den Ansprüchen 1 oder 2 umfasst, sowie ein Metall ausgewählt aus: Rh, Ru, Co, Ir,
oder einer Verbindung nach einem der Ansprüche 1 oder 2 und einer Substanz, welche ein Metall ausgewählt aus: Rh, Ru, Co, Ir aufweist;
c) Zuführen von H₂ und CO,
d) Erwärmen des Reaktionsgemisches, wobei das Olefin zu einem Aldehyd umgesetzt wird.

## Claims

1. Compound of the formula (**I**): 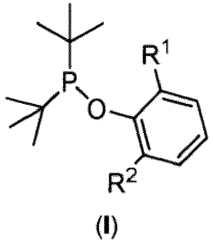 wherein
R¹ and R² are - (C₆-C₂₀) aryl,
wherein the aryl groups mentioned may be substituted as follows:
substituted - (C₁-C₁₂) alkyl groups, substituted -O- (C₁-C₁₂) alkyl, substituted - (C₆-C₂₀) aryl, substituted -O- (C₆-C₂₀) aryl may have one or more substituents; the substituents are independently selected from: - (C₁-C₁₂) alkyl, -O-(C₁-C₁₂) alkyl, halogen.

2. Compound according to Claim 1, wherein R¹ and R² are the same radical.

3. Use of a compound according to Claim 1 or 2 in a ligand-metal complex for the catalysis of a hydroformylation reaction.

4. Method comprising the method steps:
a) providing an olefin,
b) adding a complex which comprises a compound according to Claims 1 and 2 and also a metal selected from: Rh, Ru, Co, Ir,
or a compound according to one of Claims 1 and 2 and a substance having a metal selected from: Rh, Ru, Co, Ir;
c) feeding in H₂ and CO,
d) heating the reaction mixture, as a result of which the olefin is converted to an aldehyde.

## Revendications

1. Composé de la formule (I) : 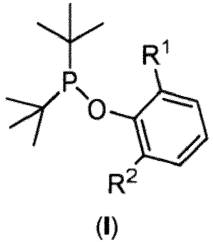
R¹ et R² représentant -C₆₋₂₀-aryle
les groupes aryle mentionnés pouvant être substitués comme suit :
les groupes -C₁₋₁₂-alkyle substitués, -O-C₁₋₁₂-alkyle substitués, -C₆₋₂₀-aryle substitués, -O-C₆₋₂₀-aryle substitués peuvent présenter un ou plusieurs substituant(s) ; les substituants sont choisis indépendamment les uns des autres parmi : -C₁₋₁₂-alkyle, -O-C₁₋₁₂-alkyle, halogène.

2. Composé selon la revendication 1, R¹ et R² représentant le même radical.

3. Utilisation d'un composé selon la revendication 1 ou 2, dans un complexe ligand-métal pour la catalyse d'une réaction d'hydroformylation.

4. Procédé comprenant les étapes de procédé de :
a) mise à disposition d'une oléfine,
b) ajout d'un complexe, lequel comprend un composé selon les revendications 1 ou 2, ainsi qu'un métal choisi parmi : Rh, Ru, Co, Ir,
ou d'un composé selon l'une quelconque des revendications 1 ou 2 et d'une substance qui présente un métal choisi parmi : Rh, Ru, Co, Ir ;
c) introduction de H₂ et de CO,
d) chauffage du mélange réactionnel, l'oléfine étant transformée en un aldéhyde.
